Europäisches Patentamt

European Patent Office

Office européen des brevets

(11) Veröffentlichungsnummer: **0 157 392**
A2

## (12) EUROPÄISCHE PATENTANMELDUNG

(21) Anmeldenummer: 85103838.0

(22) Anmeldetag: 29.03.85

(51) Int. Cl.⁴: **C 23 C 22/83**, C 09 D 5/10

(30) Priorität: 02.04.84 DE 3412234

(43) Veröffentlichungstag der Anmeldung: 09.10.85
**Patentblatt 85/41**

(84) Benannte Vertragsstaaten: **AT BE CH DE FR GB IT LI LU NL SE**

(71) Anmelder: **Inmont GmbH, Brühler Strasse 2-20, D-5300 Bonn 1 (DE)**

(72) Erfinder: **Lorenz, Wolfgang, Dipl.-Ing., Lodenhelde 19, D-4010 Hilden (DE)**
Erfinder: **Arenz, Albert, Dipl.-Ing., Siebengebirgsring 5, D-5309 Meckenheim (DE)**

(74) Vertreter: **Klöpsch, Gerald, Dr.-Ing., An Gross St. Martin 6, D-5000 Köln 1 (DE)**

(54) Gleitfähiger und schweissbarer Korrosionsschutzprimer für phosphatiertes oder chromatiertes, elektrolytisch dünnverzinktes, verformbares Stahlblech.

(57) Die Erfindung betrifft einen gleitfähigen und schweissbaren Korrosionsschutzprimer für phosphatiertes oder chromatiertes, elektrolytisch dünnverzinktes, verformbares Stahlblech, der aus einem Gemisch von 70 bis 95 Gew.-% Zink, Aluminium, Graphit und/oder Molybdänsulfid und Korrosionsschutzpigmenten und 5 bis 30 Gew.-% organischen Bindemitteln, bezogen auf Trockenfilmschicht, sowie gegebenenfalls bekannten Additiven besteht. Mit einem solchen Korrosionsschutzprimer wird der unzureichende Korrosionsschutz eines dünnverzinkten, phosphatierten oder chromatierten Stahlblechs, wirksam gegen Korrosion geschützt, wobei der Korrosionsschutz auch nach dem Verformen voll erhalten bleibt und die beschichteten Bleche punktschweissbar sind.

0157392

DR.-ING. GERALD KLÖPSCH

PATENTANWALT

An Groß St. Martin 6
D 5000 KÖLN 1

Telefon: (02 21) 23 83 48
Telegramme: Marspatent
Telex-Nr. 8 882 336

Kl/Ku/we 22.3.1985

INMONT GMBH, Brühler Strasse 2 - 20, 5300 Bonn 1

## Gleitfähiger und schweißbarer Korrosionsschutzprimer für phophatiertes oder chromatiertes, elektrolytisch dünnverzinktes, verformbares Stahlblech

Die Erfindung betrifft einen gleitfähigen und schweißbaren Korrosionsschutzprimer für phosphatierte oder chromatierte, elektrolytisch dünnverzinkte, verformbare Stahlbleche.

Zinkstaub-Primersysteme für verformbares, phosphatiertes oder chromatiertes Stahlblech, bei dem der Korrosionsschutz auch nach der Verformung des Blechs (zum Beispiel mittels spanloser Verformung durch Abpressen) erhalten bleibt, sind bereits aus der DE-PS 32 32 755 bekannt. Der Korrosionsschutz dieser Zinkstaub-Primersysteme genügt jedoch nicht mehr den heutigen Forderungen, da aufgrund mangelnden kathodischen Schutzes relativ

0157392

frühzeitig Rotrostbildung in Korrosionsversuchen auftritt. Wegen des besseren kathodischen Schutzes bei gleichzeitig hoher Oberflächenqualität werden heute weitgehend elektrolytisch mit einer vergleichsweise dicken Auflage von 7,5 bis 10 µm verzinkte Bleche verwendet. Wachsende Auflagendicke der Zinkschicht bringt jedoch Probleme bei der Verformbarkeit mit sich. Zwar lassen sich derart elektrolytisch verzinkte Bleche verformen, jedoch ist hierfür ein vergleichsweise hoher Schmiermittelbedarf erforderlich. Trotz dieser Maßnahmen lagert sich an den Presswerkzeugen im Laufe der Zeit Zink ab, wodurch die Standzeit erheblich verkürzt wird. Außerdem ist der Energieaufwand bei der Aufbringung der für den Korrosionsschutz erforderlichen Zinkdicken von 7,5 bis 10 µm sehr hoch. Allein von daher wäre der Einsatz von dünnverzinkten Blechen einer Zinkschichtdicke von etwa 2,5 µ erwünscht. Um in einer elektrolytischen Verzinkungsanlage die für den Korrosionsschutz erforderlichen Schichtdicken im Bereich von 7,5 bis 10 µm zu erzielen, muss die Beschichtungsgeschwindigkeit gegenüber einer Dünnverzinkung ganz erheblich, und zwar auf etwa 36 m/min vermindert werden. Könnte man dünnverzinkte Bleche mit einer Zinkauflage von nur 2,5 µm verwenden, so würde sich die Produktionsgeschwindigkeit auf 120 m/min erhöhen lassen.

Aufgabe der Erfindung ist daher die Schaffung eines Korrosionsschutzprimers, der den Einsatz von dünnverzinkten Stahlblechen einer Zinkschichtdicke im Bereich von 2 bis 4 µm erlaubt, wobei dieser Korrosionsschutzprimer dem dünnverzinkten Blech wenigstens den gleichen Korrosionsschutz verleiht wie eine Zinkschichtdicke von 7,5 bis 10 µm, wobei dieser Korrosionsschutzprimer

0157392

auch die Verformbarkeit gegenüber einem dickverzinkten Blech erleichtert bzw. verbessert.

Diese Aufgabe wird erfindungsgemäß durch die kennzeichnenden Merkmale des Patentanspruchs 1 gelöst.

Überraschenderweise bewirkt der erfindungsgemäße Korrosionsschutzprimer, wenn er in Trockenfilmdicken von wenigstens 4 µm auf ein dünnverzinktes Stahlblech einer Zinkschichtdicke von etwa 2,5 µm aufgebracht wird, einen Korrosionsschutz, der dem eines dickverzinkten Blechs mit einer Zinkschichtdicke von 7,5 µm nicht nur ebenbürtig, sondern sogar überlegen ist.

Darüberhinaus lässt sich ein erfindungsgemäss beschichtetes, dünnverzinktes Blech besser verformen (z.B. tiefziehen) als ein dickverzinktes Blech. Eine Verschmutzung der Verformungswerkzeuge und eine hierdurch bedingte geringere Standzeit werden vermieden.

Der erfindungsgemäße Korrosionsschutzprimer ist verformbar wie z.B. bei der spanlosen Verformung und schweißbar, so daß die damit beschichteten Stahlbleche neben neben dem ausreichenden kathodischen Korrosionsschutz punktschweißbar sind und erneut phophatiert und elektrophoretisch beschichtet werden können. Der erfindungsgemäße Korrosionsschutzprimer erlaubt die in der Automobilindustrie gebräuchlichen anschließenden Arbeitsgänge wie Entfetten, Phosphatieren, Grundieren mit Spritz- bzw. Elektrotauchgrundierungen in einwandfreier Weise. Da durch die Erfindung nicht nur die Verarbeitung sehr großer Flächen möglich wird, sondern auch die Kapazität der elektrolytischen Verzinkungsanlagen wesentlich erhöht wird, stellt sie einen großen Fortschritt, insbesondere für die Stahl- und Automobilindustrie dar. Gleichermaßen ist die Erfindung jedoch auch anwendbar im Schiffbau, im Stahlmöbelbau und in der Verpackungs- sowie der Automobil-Zulieferindustrie.

Die als Bindemittel im erfindungsgemäßen Korrosionsschutzprimer verwendeten Produkte sind bekannt. Es handelt sich hierbei um gesättigte Polyesterharze und/oder Epoxidharze sowie deren Derivate, wie z.B. Vorkondensate und Ester.

Neben Zink, Aluminium und/oder einem Gleitmittel wie Graphit oder Molybdänsulfid sind gegebenenfalls noch andere Korrosionsschutzpigmente, vorzugsweise auf Chromat-, Phosphat- oder Boratbasis vorhanden, wie z.B. Zinkkaliumchromat und/oder Zinkphosphat. Ferner können im Ansatz des Korrosionschutzprimers, der in den üblichen organischen Lösungsmitteln appliziert wird, bekannte Additive enthalten sein, die das Absetzen verhindern sollen. Es handelt sich um an sich bekannte Antiabsetzmittel, wie z.B. auf Basis pyrogener Kieselsäure, Bentoniten und hydriertem Rizinusöl.

Die Menge des im erfindungsgemäßen Korrosionsschutzpri-mer vorhandenen Gleitmittels ist von der Art des verwendeten Gleitmittels abhängig und beträgt etwa 1 bis 5 %, bezogen auf Trockenfilm. Zu viel Gleitmittel beeinträchtigt die Haftung der nachfolgenden Schichten, zu wenig verschlechtert die Verformbarkeit.

Die Trockenfilmschichtstärke sollte vorzugsweise mindestens 4 µm betragen. Nach oben ist die Dicke durch die Schweißbarkeit begrenzt; im Regelfall beträgt die Obergrenze 10 µm.

Die Gewichtsangaben beziehen sich bei dem gleitfähigen und elektrisch leitenden Korrosionsschutzprimer auf den nach der Trocknung verbleibenden Feststoff.

Die Erfindung wird anhand der nachfolgenden Beispiele erläutert, wobei elektrolytisch mit 2,5 µm verzinktes Stahlblech verwendet wird, das in bekannter Weise gereinigt, entfettet und phosphatiert oder chromatiert wurde, worauf anschließend nach dem Spritz-, Tauch-, Streich-, Flut oder Coil-Coiting-Verfahren mit dem erfindungsgemäßen Primer beschichtet und bei Objekttemperaturen von 210 bis 250 °C ausgehärtet wird.

In den Beispielen ist die gewichtsmäßige Rezeptur des lösungsmittelhaltigen Korrosionsschutzprimers aufgeführt, d.h. die gelöste Form, die zur Applikation erforderlich ist.

### Beispiel 1

Das verwendete verzinkte Stahlblech weist eine Stärke von 0,75 mm und eine Breite von 1,85 m auf und ist in herkömmlicher Weise entfettet, phosphatiert oder chromatiert.

Für die Weitere Behandlung der Oberfläche werden die nachstehend näher beschriebenen Lösungen verwendet. In diesen Rezepturen bedeutet Teile in jedem Fall Gewichtsteile.

| | |
|---|---|
| Epoxid/Phenol-Präkondensat /42%ig | 17,00 |
| Epoxiester /45%ig | 17,00 |
| Hydriertes Rizinusöl (Spez.Gew. 1,021) | 1,00 |
| Äthyleglykolacetat | 18,00 |
| Aromat. Kohlenwasserstoff (Siedebereich 162-180°C) | 15,30 |
| Zinkstaub (99,9% Zn) | 20,00 |
| Molybdändisulfid | 1,30 |
| Aluminium Bronze 65% in arom. KW | 6,40 |
| Zinkkaliumchromat | 2,00 |
| Methoxy-Propanol | 2,00 |
| | 100,00 |

0157392

Das gemäß Beispiel 1 beschichtete Blech wird im Korrosionstest (SS DIN 50021) mit einem elektrolytisch dickverzinktem Blech einer Zinkschichtdicke von 7,5 - 8 µm verglichen, wobei die Korrosionsbelastung nach 360 Stunden gemessen wurde.

Menge und Größe der Blasen wurden nach DIN 532o9 bestimmt, der Rostgrad Ri nach DIN 53 219.

Es wurden folgende Ergebnisse erhalten:

|  | DIN 53209 | DIN %53210 |
|---|---|---|
| 1. Blech mit einer Zinkschicht von 7,5 - 8 µm | m0/g0 | Ri 1-2 |
| 2. Erfindungsgemäß beschichtetes Blech (Schichtdicke 5 µm) | m0/g0 | Ri 0 |

### Beispiel 2

Untergrund wie bei Beispiel 1

| | |
|---|---|
| Epoxid/Phenol Präkondensat/42%ig | 17,00 |
| Epoxiester /45%ig | 17,00 |
| Hydriertes Rizinusöl (Spez.Gew. 1,021) | 1,00 |
| Äthylglykolacetat | 18,00 |
| Aromat. Kohlenwasserstoffe (Siedebereich 162-180°C) | 14,30 |
| Zinkstaub (99,9% Zn) | 20,00 |
| Molybdänsulfid | 1,30 |
| Aluminium Bronze 65% in arom. KW | 6,40 |
| Zinkaluminiumorthophosphat | 3,00 |
| Methoxy-Propanol | 2,00 |
| | 100,00 |

## Beispiel 3

Untergrund wie bei Beispiel 1

| | |
|---|---|
| Gesättigter, linearer ölfreier Mischpoly-ester 30%ig auf Basis Terephtalsäure (Dynapol L 205) | 42,00 |
| Hexamethoxymethylmelamin 98%ig | 3,00 |
| Äthylglykolacetat | 14,00 |
| Aromat. Kohlenwasserstoff (162-180°) | 8,20 |
| Zinkstaub (99,9% Zn) | 20,00 |
| Molybdändisulfid | 1,30 |
| Aluminium Bronze 65% in arom.KW | 6,50 |
| Zinkkaliumchromat | 2,00 |
| Methoxypropanol | 2,00 |
| Katalysator, verkappt auf Basis Morpholin-salz der Paratoleolsulfonsäure | 1,00 |
| | 100,00 |

Patentansprüche

1. Gleitfähiger und schweißbarer Korrosionsschutzprimer
   für phophatiertes oder chromatiertes, elektrolytisch dünnverzinktes und verformbares Stahlblech, dadurch gekennzeichnet, daß der Korrosionsschutzprimer aus einer
   Mischung von

   a) 70 bis 95 Gew.-%, bezogen auf den Trockenfilm, von
      Zink, Aluminium, anderen Korrosionsschutzpigmenten,
      Graphit und/oder Molybdänsulfid und

   b) 5 bis 30 Gew.-%, bezogen auf den Trockenfilm, eines
      organischen Bindemittels sowie gegebenenfalls
      üblichen Additiven
      besteht.

2. Korrosionsschutzprimer nach Anspruch 1, dadurch gekennzeichnet, daß die Mischung aus 80 bis 90 Gew.-% der
   Komponenten a) und
   10 bis 20 Gew.-% der Komponenten b) besteht.

3. Korrosionsschutzprimer nach Anspruch 1 oder 2, gekennzeichnet durch einen Gehalt an Polyesterharzen und/oder
   Epoxidharzen sowie deren Derivate als organische Bindemittel.

4. Korrosionsschutzprimer nach Ansprüchen 1 bis 3, gekennzeichnet durch eine Trockenfilmschichtdicke von 4 bis
   10 µ.

5. Korrossionsschutzprimer nach Anspruch 5, gekennzeichnet
   durch eine Trockenfilmschichtdicke von 5 bis 9 µ.

6. Korrosionsschutzprimer nach Anspruch 6, gekennzeichnet durch eine Trockenfilmschichtdicke von 6 bis 8 μ.

7. Verwendung des Korrosionsschutzprimers nach Ansprüchen 1 bis 6 für elektrolytisch dünnverzinktes Stahlblech mit einer Zinkschichtstärke von 2 bis 4 μ.